# EUROPÄISCHE PATENTSCHRIFT

(11) **EP 3 623 851 B1**
(45) Veröffentlichungstag und Bekanntmachung des Hinweises auf die Patenterteilung: **09.06.2021**
(21) Anmeldenummer: 19189033.4
(22) Anmeldetag: 30.07.2019
(51) Int. Cl.: G02B 3/00, G02B 27/09, G02B 5/02, F21V 5/04

(54) **OPTISCHES STRAHLFORMUNGSELEMENT, LICHTSENDERANORDNUNG UND OPTOELEKTRONISCHE SENSORANORDNUNG**
OPTICAL BEAM FORMING ELEMENT, LIGHT EMITTING ASSEMBLY, AND OPTOELECTRONIC SENSOR ASSEMBLY
ÉLÉMENT OPTIQUE DE FORMATION DE FAISCEAU, DISPOSITIF ÉMETTEUR DE LUMIÈRE ET DISPOSITIF CAPTEUR OPTOÉLECTRONIQUE

(30) Priorität: 24.08.2018 DE 102018120725
(43) Veröffentlichungstag der Anmeldung: 18.03.2020
(73) Patentinhaber: SICK AG, 79183 Waldkirch (DE)
(72) Erfinder: Russ, Thomas, 79211 Denzlingen (DE); Steinkogler, Sascha, 79106 Freiburg (DE)
(74) Vertreter: Manitz Finsterwald Patent- und Rechtsanwaltspartnerschaft mbB

(56) Entgegenhaltungen:
- EP-A1- 3 343 252
- DE-A1-102010 002 952
- DE-A1-102011 051 590
- US-A1- 2014 327 783

## Beschreibung

Die vorliegende Erfindung betrifft ein optisches Strahlformungselement zum Formen und Homogenisieren eines Strahlenbündels, mit einem Array von Mikrolinsen, welche einen jeweiligen Vertex oder Scheitelpunkt aufweisen, wobei die Lateralpositionen der Mikrolinsen in dem Array, bezogen auf den jeweiligen Vertex, auf der Grundlage eines regelmäßigen Musters vorbestimmt sind.

Für eine Vielzahl von optischen Anwendungen ist es erforderlich, ein Strahlenbündel mit bestimmten Eigenschaften zu formen. Eine dieser Eigenschaften kann darin bestehen, dass das Strahlenbündel parallel sein soll. Zur Erzeugung eines solchen parallelen Strahlenbündels kann eine Lichtsenderanordnung mit einer punktförmigen, divergenten Lichtquelle und einer Sendeoptik eingesetzt werden, welche einen Kollimator umfasst. Ohne den Einsatz geeigneter optischer Elemente zur Strahlformung weisen solche Strahlenbündel in der Regel jedoch einen gaußförmigen Strahlquerschnitt auf.

Viele Anwendungen erfordern jedoch ein Strahlprofil mit einem annähernd rechteckigen Querschnitt, welches auch als Top-Hat-Strahlprofil bezeichnet wird. Um eine möglichst gleichmäßige Ausleuchtung zu erzielen, soll ein solches Top-Hat-Strahlprofil einen möglichst homogenen, gleichbleibenden Intensitätsverlauf über den gesamten Querschnitt sowie eine hohe Flankensteilheit an den Rändern aufweisen.

Eine herkömmliche Methode zur Erzeugung eines Top-Hat-Strahlprofils besteht darin, zwischen einer Laserdiode als Lichtquelle und einer Kollimatorlinse eine Lichtleitfaser, beispielsweise eine polymer-optische Faser (POF), einzusetzen, welche aus Platzgründen ein- oder mehrfach gewickelt sein kann. Weiterhin sind Strahlformungselemente bekannt, bei denen diffraktive optische Elemente (DOE) als Strahlformer und/oder als Homogenisierer bzw. Diffusor eingesetzt werden. Lichtsenderanordnungen mit derartigen DOE sind jedoch sehr empfindlich gegenüber Dejustierungen, Wellenlängenverschiebungen und variierenden Ausleuchtungsverteilungen aufgrund von Serienstreuungen des Divergenzwinkels von Laserdioden, welche bevorzugt als Lichtquelle eingesetzt werden.

Eine weitere Möglichkeit zur Erzeugung eines Strahlenbündels mit gleichförmiger Intensitätsverteilung besteht darin, Arrays von Mikrolinsen oder Mikrolinsenarrays einzusetzen. Bei diesen Arrays von Mikrolinsen ist eine Vielzahl von identischen oder ähnlichen Mikrolinsen gemäß einem vorbestimmten regelmäßigen Muster angeordnet. Derartige Beleuchtungssysteme sind beispielsweise in US 7 186 004 B2 und US 6 859 326 B2 beschrieben. Die Verwendung von Mikrolinsenarrays in Verbindung mit einer monochromatischen Lichtquelle kann jedoch aufgrund von Beugungseffekten zu unerwünschten Interferenzerscheinungen führen, die die Homogenität des Strahlprofils negativ beeinflussen. Zur Verminderung dieser Interferenz- oder Beugungseffekte wird beispielsweise in US 6 859 326 B2 eine Verwendung von Mikrolinsen mit unterschiedlichen Krümmungsradien bzw. Brennweiten vorgeschlagen.

In EP 3 343 252 A1 wird eine aus einem Mikrolinsenarray bestehende Diffusorplatte beschrieben, bei welcher die Lage der einzelnen Mikrolinsen ausgehend von einem hexagonalen Gitter in zufälliger Weise variieren und auch die Aperturgrößen und die Krümmungsradien der jeweiligen Linsen variieren.

DE 10 2010 002 952 A1 betrifft die Verwendung eines Mikrolinsenarrays als Sekundäroptik bei einem Head-Up-Display zur Erzeugung eines Top-Hat-Profils.

DE 10 2011 051 590 A1 betrifft ein optisches Instrument in extraterrestrischer Umgebung mit einem Strahlformungselement zur Erzeugung einer homogenen Strahlungsintensität aus einer Strahlungsquelle, wobei das Strahlformungselement aus einem Mikrooptikarray gebildet ist. Als Mikrooptikarray wird neben einem Mikrospiegelarray auch ein Mikrolinsenarray angegeben. Der durch die f-Zahl (Brennweite/Durchmesser der Linsen) eingestellte Streuwinkelbereich der Linsen soll kleiner ±10°, bevorzugt ±5° sein.

Aus US 2014/327783 A1 geht eine Lichtsenderanordnung hervor, bei der Licht von einer punktförmigen, divergenten Lichtquelle mittels eines vom Brechungsindex abhängigen Phasenfilters auf ein Array von Photodetektoren aufgeteilt wird.

Es ist die Aufgabe der Erfindung, ein optisches Strahlformungselement zu schaffen, welches ein Strahlenbündel mit großer Homogenität erzeugen kann.

Die Lösung erfolgt durch ein optisches Strahlformungselement mit den Merkmalen des Anspruchs 1. Bei dem erfindungsgemäßen optischen Strahlformungselement sind durch das regelmäßige Muster jeweilige Referenzpositionen für den Vertex einer jeweiligen Mikrolinse definiert, wobei die Referenzpositionen jeweils den Mittelpunkt eines vorbestimmten jeweiligen Verteilungsbereichs bilden, und wobei die Lateralpositionen gemäß einer vorbestimmten ersten stochastischen Verteilungsfunktion innerhalb des jeweiligen Verteilungsbereichs angeordnet sind. Die Mikrolinsen weisen zumindest ein jeweiliges Phasenverschiebungsmerkmal auf, welches derart gewählt ist, dass die Mikrolinsen für durchtretendes Licht eine jeweilige Phasenverschiebung erzeugen, wobei sich die jeweiligen durch die Mikrolinsen erzeugten Phasenverschiebungen gemäß zumindest einer vorbestimmten zweiten stochastischen Verteilungsfunktion voneinander unterscheiden.

Unter einer Lateralposition einer jeweiligen Mikrolinse wird die Position einer Mikrolinse innerhalb einer Haupterstreckungsebene des Arrays verstanden. Die Lateralpositionen sind innerhalb der jeweiligen Verteilungsbereiche gemäß der ersten Verteilungsfunktion angeordnet. Die Verteilungsbereiche sind vorteilhafterweise kreisförmig, können jedoch auch eine abweichende Kontur, beispielsweise eine hexagonale Kontur aufweisen.

Die Lateralpositionen können beispielsweise als Relativpositionen in einem Polarkoordinatensystem bezogen auf die Referenzpositionen angegeben sein, wobei die erste Verteilungsfunktion Variationen sowohl bezüglich einer Azimutkoordinate als auch bezüglich einer Radialkoordinate beschreiben kann. Die genannten Verteilungsfunktionen können mit Hilfe von Zufalls- oder Pseudozufallsfunktionen erzeugt oder beschrieben werden.

Unter einem regelmäßigen Muster wird insbesondere eine Art Gittermuster verstanden. Unter dem Begriff "Licht" wird hier nicht nur sichtbare, d.h. für das menschliche Auge sichtbare elektromagnetische Strahlung, verstanden, sondern jegliche Form von optischer Strahlung, d.h. insbesondere auch ultraviolettes oder infrarotes Licht subsumiert.

Die Mikrolinsen können insbesondere auf einem planen optischen Substrat angeordnet sein, so dass die eine Grenzfläche des Arrays plan ist und die andere Grenzfläche ein strukturiertes Höhenprofil entsprechend der Anordnung der Mikrolinsen aufweisen kann. Alternativ kann das Array auch aus beidseitig gekrümmten Linsen bestehen. Das Array von Mikrolinsen, gegebenenfalls einschließlich des planen optischen Substrats, kann beispielsweise als ein integrales Bauelement ausgebildet sein, welches beispielsweise durch Spritzgießen oder geeignete andere subtraktive oder additive Herstellungsverfahren hergestellt sein kann. Das Array selbst kann eine kreisförmige oder auch polygonale, insbesondere rechteckige oder quadratische Kontur aufweisen.

Bei dem erfindungsgemäßen Strahlformungselement erfolgt die Unterdrückung von unerwünschten Interferenz- oder Beugungseffekten dadurch, dass zum einen die an sich durch das regelmäßige Muster vorgegebene gitterartige Struktur des Mikrolinsenarrays dadurch gebrochen wird, dass die jeweiligen Lateralpositionen bezogen auf die durch das Muster vorgegebene Referenzstruktur variiert wird. Zum anderen werden diese störenden Effekte zusätzlich dadurch vermindert, dass aufgrund des Phasenverschiebungsmerkmals das durch verschiedene Mikrolinsen hindurchtretende Licht jeweils unterschiedliche Phasenverschiebungen erfährt, so dass die Interferenzeffekte, beispielsweise Interferenzminima und -maxima, aufgrund einer Störung der Kohärenz des Sendelichts weitestgehend unterdrückt werden. Dadurch kann ein Strahlprofil mit einem sehr homogenen Intensitätsverlauf erzeugt werden. Es hat sich erwiesen, dass eine Kombination der variierenden Lateralverschiebung und des variierenden Phasenverschiebungsmerkmals gemäß dem unabhängigen Anspruch 1 Interferenz- oder Beugungseffekte besonders wirkungsvoll unterdrücken und das Intensitätsprofil sehr gut homogenisieren kann und damit ein den Anforderungen genügendes Strahlformungselement schafft.

Bei dem erfindungsgemäßen Strahlformungselement erfolgt die Strahlformung ausschließlich refraktiv. Während es bei diffraktiv wirkenden Strahlformungselementen häufig schwierig ist, Beugungsanteile nullter Ordnung ausreichend zu dämpfen oder zu eliminieren, besteht diese Problematik bei dem erfindungsgemäßen Strahlformungselement nicht. Ein weiterer Vorteil besteht darin, dass die Strahlformungswirkung sowohl im Hinblick auf die Flankensteilheit als auch die Homogenität kaum wellenabhängig ist und auch eine große Toleranz gegenüber einer Fehljustierung aufweist.

Gemäß einer vorteilhaften Ausführungsform des Strahlformungselements beschreibt die erste und/oder die zweite Verteilungsfunktion eine Gleichverteilung. Dadurch lassen sich Interferenz- und Beugungseffekte besonders wirkungsvoll unterdrücken. Alternativ können jedoch auch andere Verteilungsfunktionen zugrunde gelegt werden, beispielsweise Gaußverteilungen.

Vorteilhafterweise ist der Verteilungsbereich als ein regelmäßiges Polygon oder als ein Kreis ausgebildet, dessen Durchmesser nicht mehr als 20 %, bevorzugt nicht mehr als 15 %, besonders bevorzugt nicht mehr als 10 % des Durchmessers einer Mikrolinse beträgt. Ein regelmäßiges Polygon ist ein gleichschenkliges und gleichwinkliges Polygon. Unter dem Durchmesser einer Mikrolinse wird insbesondere ein (gedachter) vorbestimmter Referenzdurchmesser verstanden, der eine Anfangsgröße für die Mikrolinsen darstellt, und der insbesondere so gewählt wird, dass die Referenzpositionen (virtuell) derart mit Mikrolinsen dieses Durchmessers besetzt werden können, dass diese minimale Abstände zu einander aufweisen und eine maximale, d.h. möglichst lückenlose Überdeckung der Arrayfläche mit Mikrolinsen erfolgen kann. Die für eine Adaption der Mikrolinsen an die jeweiligen lateralen Verschiebungen erforderlichen "Verformungen" der Linsenkonturen, die aufgrund der tatsächlichen Verteilung im Verteilungsbereich erforderlich sein können und ggf. den tatsächlichen Durchmesser verschiedener Mikrolinsen verändern, werden nicht berücksichtigt. Der Referenzdurchmesser kann beispielsweise dem Abstand zwischen benachbarten Referenzpositionen entsprechen. Bei einer Verwendung von polygonalen, insbesondere hexagonalen Mikrolinsen und/oder einem hexagonalen Verteilungsbereich, kann sich beispielsweise der Durchmesser wahlweise auf den Abstand sich einander gegenüberliegender Ecken oder Kanten des Polygons beziehen.

Gemäß einer weiteren vorteilhaften Ausführungsform weist jede Mikrolinse einen Querschnitt auf, der von einem ursprünglichen Referenzquerschnitt derart abgeleitet ist, dass benachbarte Mikrolinsen überlappungsfrei und insbesondere mit minimalem Abstand voneinander angeordnet sind. Hierdurch wird verhindert, dass das Array Bereiche aufweist, die nicht von einer Mikrolinse überdeckt sind und welche daher zur Strahlformung nicht beitragen würden. Unter einem Querschnitt einer Mikrolinse wird hier die Umgrenzung, Kontur oder Form der Mikrolinse in der Erstreckungsebene des Arrays verstanden. Wenn der Referenzquerschnitt beispielsweise kreisförmig ist, kann der tatsächliche Querschnitt, d.h. nach Anwendung der Verschiebung des Vertex innerhalb des Verteilungsbereichs auf der Grundlage der ersten stochastischen Verteilungsfunktion, ellipsenförmig sein. Bei einem weiteren Beispiel, bei welchem gemäß einer vorteilhaften Ausführungsform der Ausgangs- oder Referenzquerschnitt der Mikrolinsen ein regelmäßiges Hexagon ist, können die Mikrolinsen, deren tatsächlicher oder realer Vertex sich innerhalb des Verteilungsbereichs befindet, die Form von unregelmäßigen Hexagonen aufweisen. Grundsätzlich kann jedoch auch ein kreisförmiger Referenzquerschnitt in jeweilige polygonale Querschnitte oder Konturen der realen Mikrolinsen überführt werden.

Es hat sich als vorteilhaft erwiesen, wenn die Querschnitte der Mikrolinsen derart ausgebildet sind, dass jede Mikrolinse zumindest im Wesentlichen einer Region eines Voronoi-Diagramms entspricht, wobei ein Zentrum einer jeweiligen Region durch die Lateralposition des Vertex der zugehörigen Mikrolinse definiert ist. Eine derartige Region eines Voronoi-Diagramms oder kurz Voronoi-Region weist genau ein jeweiliges korrespondierendes Zentrum auf und umfasst alle Punkte in einer Erstreckungsebene des Arrays, welche in Bezug auf den euklidischen Abstand näher an dem korrespondierenden Zentrum dieser Region liegen als an allen anderen Zentren. Die Punkte, welche gleich weit von dem korrespondierenden Zentrum und einem anderen Zentrum liegen, bilden die Grenze zwischen zwei benachbarten Voronoi-Regionen. Die Voronoi-Regionen sind in der Regel polygonal. Für Mikrolinsen, die an Randbereiche des Arrays angrenzen, kann der betreffende Teilabschnitt des Querschnitts oder der Region abweichend definiert sein. Durch die Ausgestaltung der Mikrolinsenverteilung als Voronoi-Diagramm können alle Bereiche des Arrays lückenlos von Mikrolinsen überdeckt sein, wodurch die Nullstrahlkomponente des durchtretenden Lichts eliminiert oder zumindest stark reduziert werden kann.

Gemäß einer vorteilhaften Ausführungsform sind die Brennweiten aller Mikrolinsen zumindest dem Betrag nach gleich. Grundsätzlich können die Brennweiten aller Mikrolinsen auch absolut gleich sein, was nachfolgend noch näher erläutert wird.

Bei einem erfindugsgemäßen Strahlformungselement umfasst das Phasenverschiebungsmerkmal, dass sich die Mikrolinsen gemäß der zweiten Verteilungsfunktion bezüglich ihrer Dicke voneinander unterscheiden, wobei der Unterschied der Dicke alleine durch Addition oder Subtraktion einer planparallelen Komponente bezogen auf eine Referenzmikrolinse bewirkt ist. Unter der Dicke einer Mikrolinse wird insbesondere der Abstand zwischen den Scheitelpunkten einer jeweiligen Mikrolinse verstanden. Wenn sich die Mikrolinsen auf einem planparallelen Substrat befinden, kann auch abweichend der Anteil des planparallelen Substrats an der Dicke außer Betracht bleiben. Das Merkmal, wonach der Unterschied der Dicke alleine durch Addition oder Subtraktion einer planparallelen Komponente bewirkt ist, ist so zu verstehen, dass die Krümmungsradien und damit auch die Brennweiten der Mikrolinsen bei der Addition oder Subtraktion der jeweiligen planparallelen Komponenten nicht verändert werden. Anschaulich betrachtet variieren somit die planparallelen Komponenten gemäß der zweiten Verteilungsfunktion. Geht man beispielsweise von einer runden plan-konvexen Referenzmikrolinse aus, kann gedacht ein Zylinderelement als planparallele Komponente mit seiner einen Stirnfläche an die plane Seite der Linse "angefügt" sein, wobei dieses Anfügen nur bildlich erfolgt und tatsächlich die resultierenden Gesamtkonturen der Mikrolinsen des Arrays bereits bei der Fertigung, beispielsweise bei der Herstellung einer entsprechenden Spritzgussform, berücksichtigt werden. Allgemein betrachtet ist eine Referenzmikrolinse eine der Mikrolinsen des Arrays, auf die die Dicke aller anderen Mikrolinsen bezogen wird.

Bei einem erfindungsgemäßen Strahlformungselement beträgt ein Variationsbereich der Dicke *n*/*(n-1) x λ,* wobei n der Brechungsindex der Mikrolinsen und *λ* eine vorbestimmte Nennwellenlänge ist, für welche das Strahlformungselement ausgelegt ist, beispielsweise die Wellenlänge der Lichtquelle einer Lichtsenderanordnung, in welcher das Strahlformungselement verwendet wird. Die Nennwellenlänge kann insbesondere eine maximale Wellenlänge sein, für welche das Strahlformungselement noch sinnvoll, d.h. insbesondere unter Einhaltung von Vorgaben für die Form, die Flankensteilheit, die Homogenität und/oder die Divergenz des zu erzeugenden Strahlprofils einsetzbar ist. Unter dem Variationsbereich der Dicke wird insbesondere die Differenz in der Dicke zwischen einer Mikrolinse mit maximaler Dicke und einer Mikrolinse mit minimaler Dicke bezogen auf alle Mikrolinsen des Arrays verstanden. Durch die Einhaltung dieser Bedingung wird eine ausreichende Spreizung der Phasenverschiebungen zur Verringerung oder Eliminierung der Kohärenz des Strahlenbündels gewährleistet.

Gemäß einer weiteren vorteilhaften Ausführungsform umfasst das Phasenverschiebungsmerkmal, dass eine jeweilige Mikrolinse entweder eine positive Brennweite oder eine negative Brennweite aufweist, wobei die Zuordnung einer positiven oder negativen Brennweite zu einer jeweiligen Mikrolinse gemäß der zweiten Verteilungsfunktion vorgenommen ist. Insbesondere sind hierbei die positive und die negative Brennweite dem Betrag nach gleich groß. Das Mikrolinsenarray weist demnach sowohl konkave als auch konvexe Linsen auf. Bei Betragsgleichheit der Brennweiten sind die Divergenzen der jeweils durch eine Mikrolinse hindurchtretenden Teilstrahlenbündel im Wesentlichen gleich groß. Durch die zweite Verteilungsfunktion wird bestimmt, ob an einer jeweiligen Lateralposition eine Sammellinse oder eine Zerstreuungslinse angeordnet wird. Hierdurch kann ebenfalls eine stochastisch über die Fläche des Mikrolinsenarrays verteilte Variation der Phasenverschiebung erzielt werden.

Vorteilhafterweise ist die Anzahl der Mikrolinsen mit positiver Brennweite im Wesentlichen gleich der Anzahl der Mikrolinsen mit negativer Brennweite, wobei gewisse Abweichungen von dieser Aufteilung toleriert werden können, die beispielsweise auf eine ungerade Gesamtzahl aller Mikrolinsen des Arrays oder auf statistische Effekte zurückzuführen sein können.

Grundsätzlich ist auch denkbar, dass das Phasenverschiebungsmerkmal durch einen jeweiligen Brechungsindex einer Mikrolinse gebildet wird oder zumindest den Brechungsindex umfasst. Mit anderen Worten können die Mikrolinsen unterschiedliche Brechungsindizes aufweisen, wobei die jeweiligen Brechungsindizes gemäß der zweiten stochastischen Verteilungsfunktion gewählt sind.

Vorzugsweise wird das Phasenverschiebungsmerkmal nur durch eine der genannten Möglichkeiten realisiert, d.h. durch die stochastische Variation der Dicke, durch die stochastische Verteilung von Linsen mit positiver oder negativer Brennweite oder durch die stochastische Variation des Brechungsindex realisiert. Gemäß einer vorteilhaften Ausführungsform ist es jedoch auch denkbar, zumindest zwei dieser Phasenverschiebungsmerkmale miteinander zu kombinieren. Sofern mehr als ein Phasenverschiebungsmerkmal vorgesehen ist, kann für jedes dieser Phasenverschiebungsmerkmale eine jeweilige zweite stochastische Verteilungsfunktion vorgesehen sein, d.h. die Phasenverschiebungen werden durch mehrere zweite stochastische Verteilungsfunktionen beschrieben.

Die vorliegende Erfindung betrifft ferner eine Lichtsenderanordnung mit einer Sendelichtquelle zum Aussenden eines Sendelichtbündels, zumindest einer der Sendelichtquelle nachgeordneten Sendeoptik und einem der Sendeoptik vorgeordneten oder nachgeordneten Strahlformungselement nach einer der vorhergehenden Ausgestaltungen. Die Sendelichtquelle kann insbesondere eine Laserdiode, insbesondere eine divergent abstrahlende Laserdiode sein. Die Sendeoptik kann insbesondere eine Kollimatorlinse und ggf. weitere optische Elemente umfassen. Insbesondere kann das Strahlformungselement in die Sendeoptik integriert sein, d.h. mit der Sendeoptik oder einer Komponente der Sendeoptik, beispielsweise einer Kollimatorlinse, ein integriertes Bauteil bilden.

Die vorliegende Erfindung betrifft weiterhin eine optoelektronische Sensoranordnung mit einer Lichtsenderanordnung gemäß der vorstehend genannten Ausgestaltung, einem Lichtempfänger zum Empfangen von Lichtanteilen des Sendlichtbündels, einer Steuereinheit zum Ansteuern der Lichtsenderanordnung und einer Auswerteeinheit zum Auswerten eines Empfangssignals des Lichtempfängers. Die Steuereinheit und die Auswerteeinheit können insbesondere in einer integrierten Steuer- und Auswerteeinheit zusammengefasst sein.

Die vorstehend genannte Sensoranordnung kann insbesondere als eine Datenlichtschranke ausgebildet sein, die eine Sendeeinheit mit der Lichtsenderanordnung und der Steuereinheit und eine gegenüber der Sendeeinheit angeordnete Empfangseinheit mit dem Lichtempfänger und der Auswerteeinheit aufweist, wobei die Steuereinheit dazu eingerichtet ist, zur Übertragung von Daten zwischen der Sendeeinheit und der Empfangseinheit die Daten anhand eines Kommunikationsprotokolls auf das Sendelichtbündel aufzumodulieren, und wobei die Auswerteeinheit dazu eingerichtet ist, die Daten durch Demodulation anhand des Kommunikationsprotokolls aus dem Empfangssignal auszulesen.

Andere beispielhafte Sensoranordnungen können Lichtschranken, Lichttaster oder Lichtgitter sein.

Weitere vorteilhafte Ausführungsformen der Erfindung ergeben sich aus den Unteransprüchen, der Beschreibung und den Zeichnungen.

Die Erfindung wird nachfolgend anhand von Ausführungsbeispielen mit Bezug auf die Zeichnungen beschrieben. Es zeigen:
- Fig. 1: eine Intensitätsverteilung eines Strahlenbündels für ein optisches Strahlformungselement gemäß dem Stand der Technik;
- Fig. 2: eine schematische Darstellung einer ein Strahlformungselement umfassenden Lichtsenderanordnung gemäß einem ersten Ausführungsbeispiel;
- Fig. 3: eine schematische Darstellung einer ein Strahlformungselement umfassenden Lichtsenderanordnung gemäß einem zweiten Ausführungsbeispiel;
- Fig. 4: eine schematische Darstellung einer Mikrolinse für ein beispielhaftes Strahlformungselement;
- Fig. 5: eine schematische, ausschnittsweise Draufsicht eines Strahlformungselements gemäß dem Stand der Technik;
- Fig. 6: eine schematische ausschnittsweise Draufsicht eines Strahlformungselements gemäß einem Ausführungsbeispiel;
- Fig. 7: eine perspektivische Teilansicht eines Strahlformungselements gemäß einem Ausführungsbeispiel;
- Fig. 8: ein ausschnittsweises Höhenprofil eines Strahlformungselements gemäß dem Ausführungsbeispiel von FIG. 7;
- Fig. 9: eine perspektivische Teilansicht eines Strahlformungselements gemäß einem weiteren Ausführungsbeispiel;
- Fig. 10: ein ausschnittsweises Höhenprofil eines Strahlformungselements gemäß dem weiteren Ausführungsbeispiel von FIG. 9.

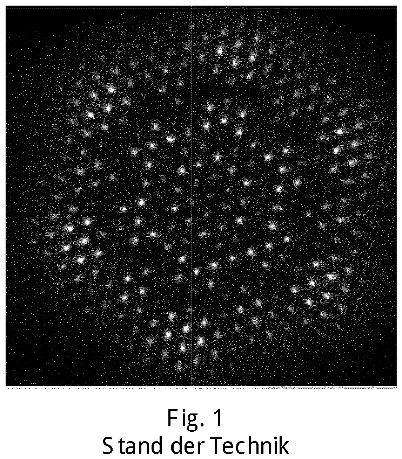

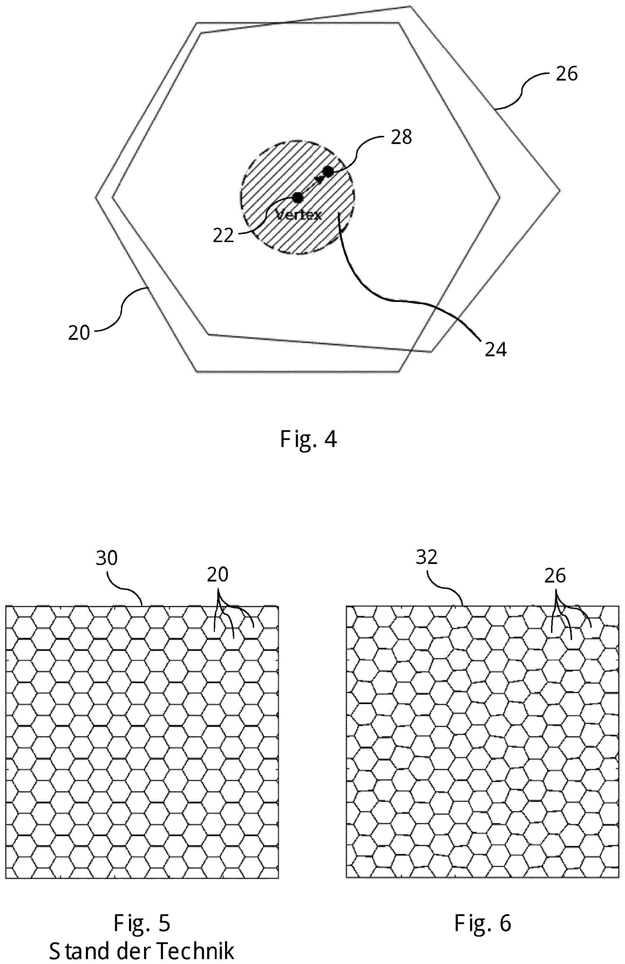

Fig. 1 zeigt eine zweidimensionale Intensitätsverteilung eines optischen Strahlenbündels, welches durch ein Strahlformungselement gemäß dem Stand der Technik erzeugt wurde. Ein derartiges herkömmliches Strahlformungselement umfasst eine periodische Anordnung von gleichartigen hexagonalen Mikrolinsen (vgl. Fig. 5). Anstelle einer möglichst homogenen Intensitätsverteilung über den gesamten Querschnitt des Strahlenbündels weist diese Intensitätsverteilung eine Vielzahl von Intensitätsmaxima und -minima auf. Diese strukturierte Intensitätsverteilung ist auf Interferenzeffekte durch die periodische Anordnung der gleichartigen oder identischen hexagonalen Mikrolinsen zurückzuführen.

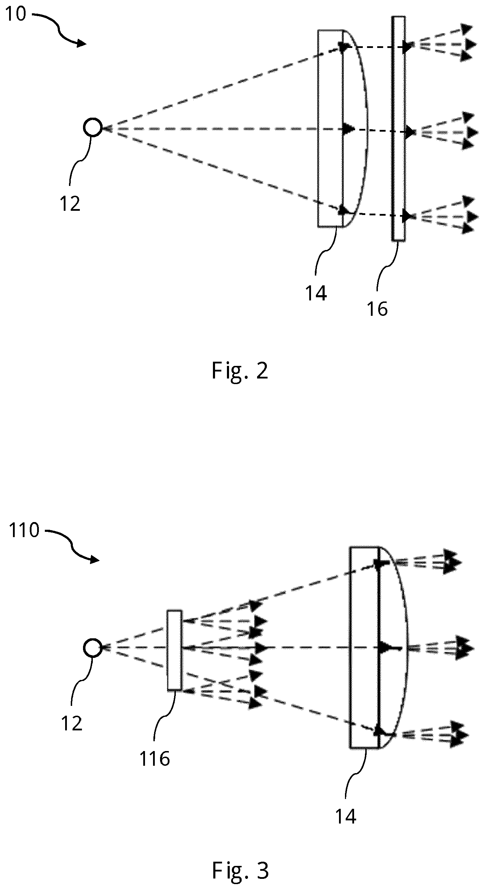

Fig. 2 zeigt gemäß einem ersten Ausführungsbeispiel eine Lichtsenderanordnung 10, welche eine punktförmige, divergente Sendelichtquelle 12, beispielsweise eine Laserdiode, umfasst. Der Sendelichtquelle 12 ist eine Sendeoptik 14 nachgeordnet, welche im vorliegenden Beispiel vereinfacht als Kollimatorlinse ausgebildet ist. Die Sendeoptik 14 kann gegebenenfalls auch weitere optische Komponenten umfassen. Der Sendeoptik 14 nachgeordnet ist ein optisches Strahlformungselement 16, welches ein Array von Mikrolinsen umfasst und nachfolgend noch näher beschrieben wird.

Fig. 3 zeigt eine Lichtsenderanordnung 110 gemäß einem zweiten Ausführungsbeispiel, welches ebenfalls eine Sendelichtquelle 12, eine Sendeoptik 14 und ein Strahlformungselement 116 umfasst. Im Unterschied zum Ausführungsbeispiel von Fig. 2 ist das Strahlformungselement 116 der Sendeoptik 14 vorgeordnet, befindet sich also zwischen der Sendelichtquelle 12 und der Sendeoptik 14. Aufgrund der geänderten Position im Strahlengang ist der Querschnitt, d.h. die Apertur oder laterale Ausdehnung des Strahlformungselements 116 geringer als die Apertur des Strahlformungselements 16 (Fig. 2).

Die Strahlformungselemente 16, 116 können beispielsweise zur Strahlung eines Top-Hat-Strahlprofils mit einer homogenen, d.h. gleichbleibenden Intensität über den gesamten Strahlquerschnitt und großer Flankensteilheit an den Rändern ausgestaltet sein.

Nachfolgend wird die Konstruktion eines erfindungsgemäßen Strahlformungselements 16, 116 näher erläutert, welches als ein Array von Mikrolinsen ausgebildet ist, wobei zum einen die Lateralpositionen der jeweiligen Mikrolinsen gemäß einer ersten stochastischen Verteilungsfunktion variieren und anderseits auch die einzelnen Mikrolinsen ein jeweiliges Phasenverschiebungsmerkmal aufweisen, welches zwischen den verschiedenen Mikrolinsen des Arrays gemäß einer zweiten stochastischen Verteilungsfunktion variiert.

Mit Bezug auf Fig. 4 bis 6 wird zunächst die Implementierung der variierenden Lateralpositionen näher erläutert.

Fig. 4 zeigt eine Referenzlinse 20 mit einem zentralen Vertex 22, welche als regelmäßiges Hexagon ausgebildet ist.

Fig. 5 zeigt ein Array 30 von Mikrolinsen 20, welches dem Stand der Technik entspricht. Die Mikrolinsen 20 bzw. deren Vertices 22 (in Fig. 5 nicht dargestellt) bilden ein regelmäßiges Muster, welches eine Ausgangsanordnung für ein Array von Mikrolinsen für ein erfindungsgemäßes Strahlformungselement bildet.

Gemäß Fig. 4 wird ein kreisförmiger Verteilungsbereich 24 mit dem Vertex 22 der Referenzlinse 20 als Zentrum definiert. Der Durchmesser des Verteilungsbereichs 24 kann beispielsweise durch Bezug auf den Durchmesser der Referenzmikrolinse 20 definiert werden und kann beispielsweise nicht mehr als 20 %, bevorzugt nicht mehr als 15 % und besonders bevorzugt nicht mehr als 10 % des Durchmessers der Referenzmikrolinse 20 betragen, wobei als Bezugsgröße des Referenzdurchmessers wahlweise auf den Abstand zwischen den Ecken oder den Kanten der hexagonalen Kontur der Referenzmikrolinse 20 Bezug genommen werden kann. Die Position des Vertex 22 der Referenzmikrolinse 20 stellt somit eine Referenzposition 22 dar. Der Durchmesser des Verteilungsbereichs 24 ist in Fig. 4 vergrößert dargestellt.

Auf der Grundlage der jeweiligen Referenzpositionen 22 können gemäß einer vorbestimmten ersten stochastischen Verteilungsfunktion, beispielsweise einer Gleichverteilungsfunktion, jeweilige Lateralpositionen 28 bestimmt werden, auf welche jeweils eine Mikrolinse 26 mit ihrem Vertex 28 positioniert werden soll.

Würde man die entsprechenden schematischen Diagramme gemäß Fig. 4 für jede einzelne Mikrolinse 26 des Mikrolinsenarrays übereinanderlegen, würden die Lateralpositionen 28 eine Punktmenge bilden, die über den Verteilungsbereich 24 gleichmäßig verteilt sind.

Ein Ausschnitt eines Arrays 32 von Mikrolinsen 26, deren jeweiliger Vertex 28 sich auf der zugehörigen Lateralposition 28 befindet, ist in Fig. 6 dargestellt.

Die Abweichungen der Lateralpositionen 28 von den jeweiligen zugehörigen Referenzpositionen 22 führt dazu, dass die Abstände zwischen den Vertices 28 der Mikrolinsen 26 des Arrays 32 variieren. Um dennoch eine lückenlose Parkettierung des Arrays 32 mit Mikrolinsen 26 zu erzielen, muss die Größe der jeweiligen Mikrolinsen 26 individuell angepasst werden.

Diese Anpassung kann insbesondere dadurch erfolgen, dass die Querschnitte oder Konturen der Mikrolinsen 26 derart ausgebildet sind, dass jede Mikrolinse 26 zumindest im Wesentlichen, d.h. insbesondere abgesehen von Randbereichen des Arrays 22, einer Voronoi-Region eines Voronoi-Diagramms entspricht. Ein Zentrum einer jeweiligen Voronoi-Region ist durch die Lateralposition 28 des Vertex der zugehörigen Mikrolinse 26 definiert. Eine Voronoi-Region umfasst alle Punkte in einer Erstreckungsebene des Arrays 32, welche in Bezug auf den euklidischen Abstand näher am korrespondierenden Zentrum, d.h. an der Lateralposition 28, liegen als an allen anderen Zentren. Die Punkte, welche gleich weit von dem korrespondierenden Zentrum oder der korrespondierenden Lateralposition 28 und einem anderen Zentrum entfernt liegen, bilden die Grenze zwischen zwei benachbarten Regionen und sind in Fig. 6 als das hexagonale Linienmuster dargestellt. Somit haben die Mikrolinsen 26 die Form von unregelmäßigen Hexagonen.

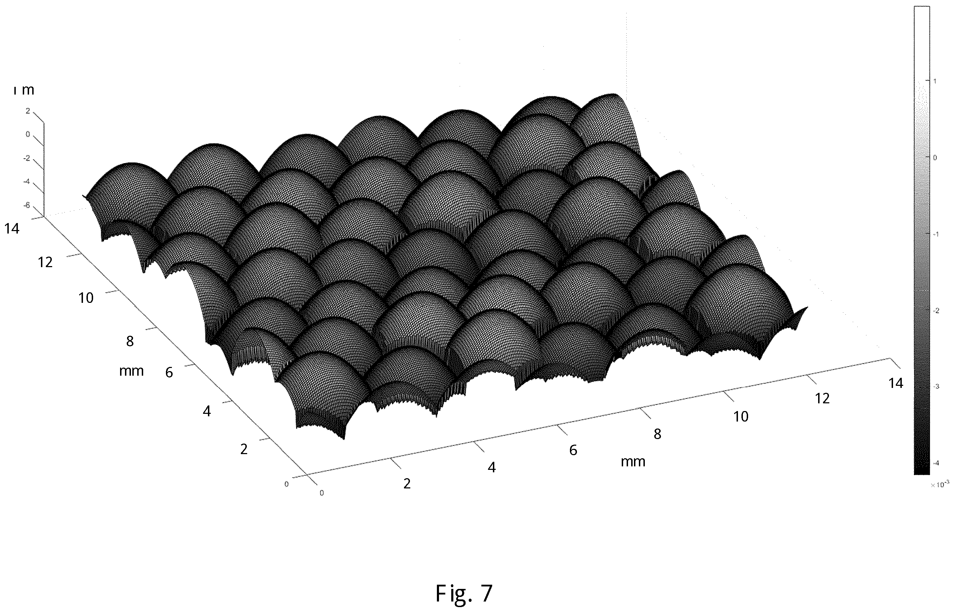

Mit Bezug nun auf Fig. 7 bis 10 wird erläutert, auf welche Weise zusätzlich zu der vorstehend beschriebenen Variation der Lateralpositionen 28 den Mikrolinsen 26 ein jeweiliges Phasenverschiebungsmerkmal aufgeprägt werden kann, welches bewirkt, dass die verschiedenen Teilstrahlenbündel, die durch jeweilige Mikrolinsen 26 hindurchtreten, unterschiedliche Phasenverschiebungen erfahren. Ausgegangen wird von einem Array 32 von hexagonalen plan-konvexen bzw. plankonkaven Mikrolinsen 26, dessen eine Fläche plan ist und dessen andere Fläche ein Höhenprofil gemäß der jeweiligen individuellen Dicken und Krümmungen der Mikrolinsen 26 aufweist.

Bei den dargestellten Ausführungsbeispielen beträgt der Durchmesser der Mikrolinsen 26, genauer der vorbestimmte Referenzdurchmesser, 2 mm, der Krümmungsradius der Mikrolinsen 26 200 mm und der Brechungsindex n 1,5.

Die Phasenverschiebungen werden gemäß einer vorbestimmten zweiten stochastischen Verteilungsfunktion erzeugt.

Für die Einführung der Phasenverschiebung oder des Phasenverschiebungsmerkmals werden im Folgenden zwei alternative Möglichkeiten beschrieben, die jedoch grundsätzlich auch miteinander kombiniert werden können.

Gemäß einer ersten beispielhaften Ausgestaltung unterscheiden sich die Mikrolinsen 26 gemäß der zweiten Verteilungsfunktion bezüglich ihrer Dicke voneinander. Der Unterschied der Dicke wird hierbei alleine durch Addition oder Subtraktion einer planparallelen Komponente bezogen auf eine Referenzmikrolinse bewirkt. Mit anderen Worten weisen benachbarte Mikrolinsen unterschiedliche Dicken auf, so dass auch die Phasenverschiebungen, welche jeweilige Mikrolinsen 26 erzeugen, sich voneinander unterscheiden. Die Dicke einer jeweiligen Mikrolinse 26 wird gemäß der zweiten Verteilungsfunktion nach dem Zufallsprinzip bestimmt. Typischerweise handelt es sich bei der zweiten Verteilungsfunktion um eine Gleichverteilung, wobei aber auch andere Verteilungsfunktionen gewählt werden können.

Grundsätzlich wird die Dicke der Mikrolinsen 26 derart variiert, dass dabei die Krümmungsradien bzw. die Brennweiten der Mikrolinsen 26 nicht verändert werden. Der Unterschied zwischen der maximalen und minimalen Phasenverschiebung innerhalb des Arrays 32 sollte vorzugsweise mehr als 2*π* betragen, damit eine gute Strahldurchmischung mit einer geringen Restgranularität im geformten Strahlenbündel erzielt werden kann. Dies kann z.B. dadurch erreicht werden, dass der Variationsbereich der Dicke, d.h. die Differenz in der Dicke zwischen einer Mikrolinse mit maximaler Dicke und einer Mikrolinse mit minimaler Dicke bezogen auf alle Mikrolinsen des Arrays, in einem Bereich von *n*/*(n-1)* x *λ* variiert, wobei n der Brechungsindex der Mikrolinsen 26 und λ eine vorbestimmte Referenzwellenlänge ist. Für den genannten Brechungsindex n von 1,5 und eine angenommene Referenzwellenlänge λ von 660 nm ergibt sich ein Variationsbereich von ca. 2 µm.

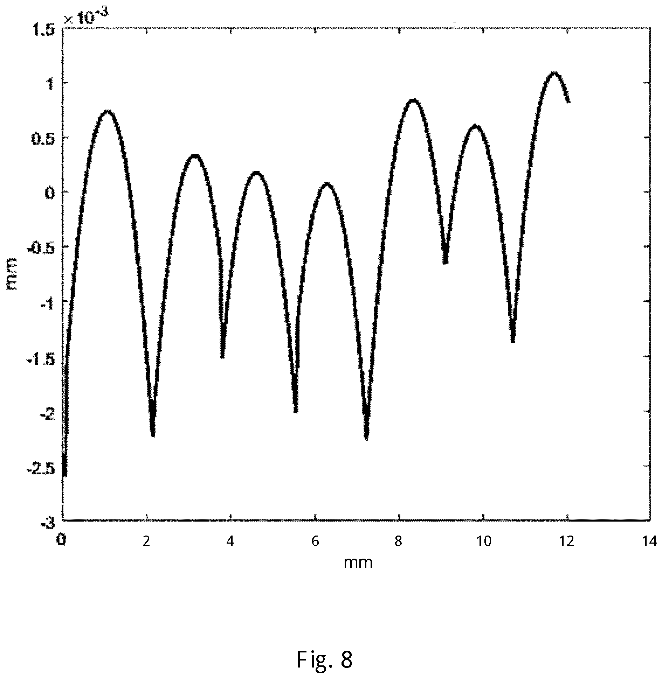

Ein Ausschnitt einer perspektivischen Ansicht einer Oberfläche eines Arrays 32 von Mikrolinsen 26 ist in Fig. 7 gemäß einer rechnerischen Simulation dargestellt. Die in Fig. 7 und auch in Fig. 8 bis 10 verwendeten Maßstäbe für die lateralen x-y-Koordinaten unterscheiden sich jeweils stark von den Maßstäben für die Höhenkoordinate z, so dass die Linsenkrümmung stark verzerrt wiedergegeben sind.

Fig. 8 zeigt ein beispielhaftes Höhenprofil eines Arrays von Mikrolinsen gemäß der Ausgestaltung von Fig. 7. Da Fig. 8 nur einen kleinen Ausschnitt eines Mikrolinsenarrays 32 wiedergibt, beträgt der aus dem Diagramm von Fig. 8 ablesbare Variationsbereich der Dicke nur etwa 1 µm. Die Abweichung von den vorstehend genannten 2 µm ist darauf zurückzuführen, dass in dem Höhenprofil nur einige wenige Mikrolinsen erfasst sind, die nicht notwendigerweise den gesamten Variationsbereich widerspiegeln.

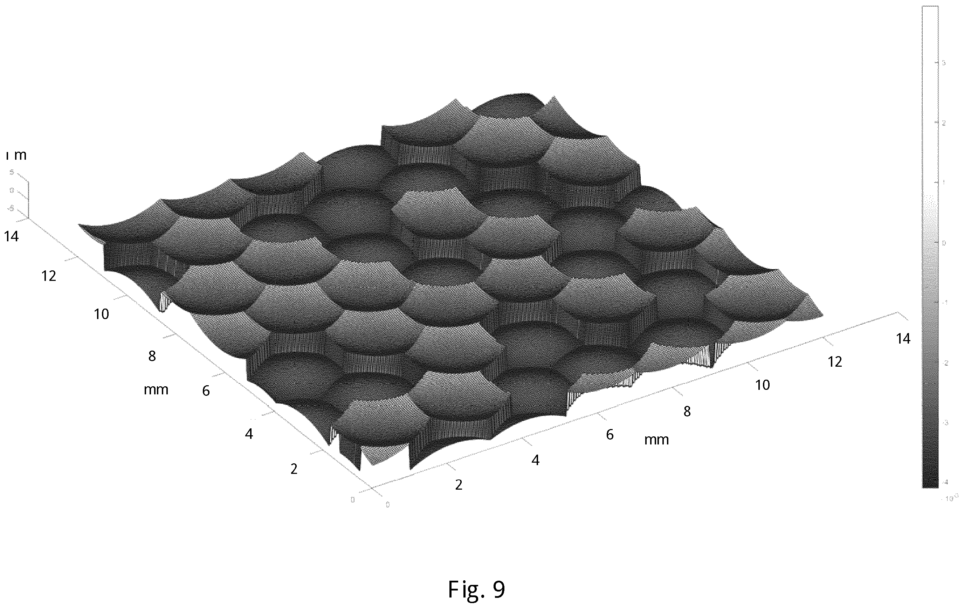

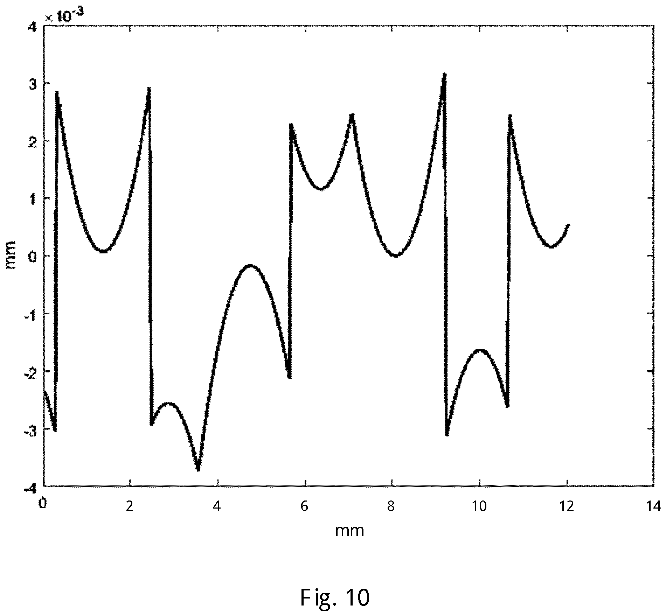

Fig. 9 und 10 illustrieren eine Implementierung des Phasenverschiebungsmerkmals gemäß einer zweiten beispielhaften Ausgestaltung.

Während bei der ersten Ausgestaltung ausschließlich konvexe Linsen oder Sammellinsen verwendet werden, weist ein Array 32 von Mikrolinsen 26 gemäß der zweiten Ausgestaltung sowohl konvexe als auch konkave Linsen, also Sammellinsen und Zerstreuungslinsen auf. Eine Zuordnung, ob an einer bestimmten Lateralposition eine Mikrolinse 26 mit positiver oder negativer Brennweite anzuordnen ist, erfolgt gemäß der zweiten Verteilungsfunktion, so dass die Mikrolinsen mit positiver Brennweite und die Mikrolinsen mit negativer Brennweite nach dem Zufallsprinzip über die Fläche des Arrays 32 verteilt sind. Grundsätzlich sind die Brennweiten bzw. die Krümmungsradien der Linsen dem Betrag nach gleich groß, wobei hiervon jedoch auch innerhalb bestimmter Grenzen abgewichen werden kann.

Ein Ausschnitt einer perspektivischen Darstellung eines derartigen Arrays 32 von Mikrolinsen 26 ist in Fig. 9 dargestellt. Ein entsprechendes beispielhaftes Höhenprofil ist in Fig. 10 wiedergegeben. Die unterschiedlichen Höhen der Scheitelpunkte der konvexen Linsen bzw. der konkaven Linsen sind darauf zurückzuführen, dass das Höhenprofil den Höhenverlauf an unterschiedlichen Positionen innerhalb der jeweiligen Mikrolinsen 26 wiedergibt und nicht zwingend bei jeder Mikrolinse durch deren Vertex 28 verläuft.

Mit einem Strahlformungselement gemäß Fig. 7 bis 10 kann in einer Lichtsenderanordnung 10 gemäß Fig. 2, bei welcher die Sendeoptik 14 eine Kollimatorlinse mit einer Brennweite von 100 mm und einer Apertur von 30 mm ist, ein Top-Hat-Strahlprofil mit einem Divergenzwinkel von ca. 0,3° erzeugt werden. Die Apertur des Strahlformungselements kann ebenfalls 30 mm betragen.

Die Verwendung eines erfindungsgemäßen Strahlformungselements 16, 116 in einer Lichtsenderanordnung (vgl. Fig. 2 und 3) kann in modularer Weise erfolgen, d.h. durch einen Austausch des Strahlformungselements 16, 116 gegen ein Strahlformungselement mit anderen Parametern bei ansonsten unverändertem optischem Aufbau der Lichtsenderanordnung 10, 110 können Strahlenbündel mit unterschiedlichen Divergenzwinkeln erzeugt werden.

### Bezugszeichenliste

- 10, 110: Lichtsenderanordnung
- 12: Sendelichtquelle
- 14: Sendeoptik
- 16, 116: Strahlformungselement
- 20: Referenzmikrolinse
- 22: Vertex der Referenzmikrolinse 20, Referenzposition
- 24: Verteilungsbereich
- 26: Mikrolinse
- 28: Vertex der Mikrolinse 26, Lateralposition
- 30: Array von Referenzmikrolinsen 20
- 32: Array von Mikrolinsen 26

## Patentansprüche

1. Optisches Strahlformungselement (16, 116) zum Formen und Homogenisieren eines optischen Strahlenbündels, mit einem Array (32) von Mikrolinsen (26), welche einen jeweiligen Vertex aufweisen, wobei die Lateralpositionen (28) der Mikrolinsen (26) in dem Array (32), bezogen auf den jeweiligen Vertex (28), auf der Grundlage eines regelmäßigen Musters vorbestimmt sind,
wobei durch das regelmäßige Muster jeweilige Referenzpositionen (22) für den Vertex einer jeweiligen Mikrolinse (26) definiert sind, wobei die Referenzpositionen (22) jeweils den Mittelpunkt eines vorbestimmten jeweiligen Verteilungsbereichs (24) bilden, und wobei die Lateralpositionen (28) gemäß einer vorbestimmten ersten stochastischen Verteilungsfunktion innerhalb des jeweiligen Verteilungsbereichs (24) angeordnet sind, und
wobei die Mikrolinsen (26) zumindest ein jeweiliges Phasenverschiebungsmerkmal aufweisen, welches derart gewählt ist, dass die Mikrolinsen (26) für durchtretendes Licht eine jeweilige Phasenverschiebung erzeugen, wobei sich die jeweiligen durch die Mikrolinsen (26) erzeugten Phasenverschiebungen gemäß zumindest einer vorbestimmten zweiten stochastischen Verteilungsfunktion voneinander unterscheiden,
**dadurch gekennzeichnet, dass**
das Phasenverschiebungsmerkmal umfasst, dass sich die Mikrolinsen (26) gemäß der zweiten Verteilungsfunktion bezüglich ihrer Dicke voneinander unterscheiden,
wobei der Unterschied der Dicke alleine durch Addition oder Subtraktion einer planparallelen Komponente bezogen auf eine Referenzmikrolinse (20) bewirkt ist, und
dass ein Variationsbereich der Dicke *n*/*(n-1) x λ* beträgt, wobei n der Brechungsindex der Mikrolinsen (26) und *λ* eine vorbestimmte Nennwellenlänge ist, für welche das Strahlformungselement (16, 116) ausgelegt ist.

2. Optisches Strahlformungselement (16, 116) nach Anspruch 1,
**dadurch gekennzeichnet,**
**dass** die erste und/oder die zweite Verteilungsfunktion eine Gleichverteilung beschreibt.

3. Optisches Strahlformungselement (16, 116) nach Anspruch 1 oder 2,
**dadurch gekennzeichnet,**
**dass** der Verteilungsbereich (24) als ein regelmäßiges Polygon oder als ein Kreis ausgebildet ist, dessen Durchmesser nicht mehr als 20%, bevorzugt nicht mehr als 15%, besonders bevorzugt nicht mehr als 10% des Durchmessers einer Mikrolinse (26) beträgt.

4. Optisches Strahlformungselement (16, 116) nach einem der vorhergehenden Ansprüche,
**dadurch gekennzeichnet,**
**dass** jede Mikrolinse (26) einen Querschnitt aufweist, der von einem ursprünglichen Referenzquerschnitt derart abgeleitet ist, dass benachbarte Mikrolinsen (26) überlappungsfrei und insbesondere mit minimalem Abstand voneinander angeordnet sind.

5. Optisches Strahlformungselement (16, 116) nach Anspruch 4,
**dadurch gekennzeichnet,**
**dass** der Referenzquerschnitt ein regelmäßiges Hexagon ist.

6. Optisches Strahlformungselement (16, 116) nach Anspruch 4 oder 5,
**dadurch gekennzeichnet,**
**dass** die Querschnitte der Mikrolinsen (26) derart ausgebildet sind, dass jede Mikrolinse (26) zumindest im Wesentlichen einer Region eines Voronoi-Diagramms entspricht, wobei ein Zentrum einer jeweiligen Region durch die Lateralposition (28) des Vertex der zugehörigen Mikrolinse (26) definiert ist.

7. Optisches Strahlformungselement (16, 116) nach einem der vorhergehenden Ansprüche,
**dadurch gekennzeichnet,**
**dass** jede Mikrolinse (26) eine jeweilige Brennweite aufweist, und
**dass** die Brennweiten aller Mikrolinsen (26) zumindest dem Betrag nach gleich sind.

8. Optisches Strahlformungselement (16, 116) nach einem der vorhergehenden Ansprüche,
**dadurch gekennzeichnet,**
**dass** das Phasenverschiebungsmerkmal umfasst, dass eine jeweilige Mikrolinse (26) entweder eine positive Brennweite oder eine negative Brennweite aufweist, wobei die Zuordnung einer positiven oder negativen Brennweite zu einer jeweiligen Mikrolinse (26) gemäß der zweiten Verteilungsfunktion vorgenommen ist.

9. Optisches Strahlformungselement (16, 116) nach Anspruch 8,
**dadurch gekennzeichnet,**
**dass** die Anzahl der Mikrolinsen (26) mit positiver Brennweite im Wesentlichen gleich der Anzahl der Mikrolinsen (26) mit negativer Brennweite ist.

10. Lichtsenderanordnung (10, 110) mit einer Sendelichtquelle (12) zum Aussenden eines Sendelichtbündels, zumindest einer der Sendelichtquelle (12) nachgeordneten Sendeoptik (14) und einem der Sendeoptik (14) vorgeordneten oder nachgeordneten optischen Strahlformungselement (16, 116) nach einem der vorhergehenden Ansprüche.

11. Optoelektronische Sensoranordnung, mit einer Lichtsenderanordnung (10, 110) nach Anspruch 10, einem Lichtempfänger zum Empfangen von Lichtanteilen des Sendelichtbündels, einer Steuereinheit zum Ansteuern der Lichtsenderanordnung (10, 110) und einer Auswerteeinheit zum Auswerten eines Empfangssignals des Lichtempfängers.

12. Optoelektronische Sensoranordnung nach Anspruch 11, ausgebildet als eine Datenlichtschranke, die eine Sendeeinheit mit der Lichtsenderanordnung (10, 110) und der Steuereinheit und eine gegenüber der Sendeeinheit angeordnete Empfangseinheit mit dem Lichtempfänger und der Auswerteeinheit aufweist, wobei die Steuereinheit dazu eingerichtet ist, zur Übertragung von Daten zwischen der Sendeeinheit und der Empfangseinheit die Daten anhand eines Kommunikationsprotokolls auf das Sendelichtbündel aufzumodulieren, und wobei die Auswerteeinheit dazu eingerichtet ist, die Daten durch Demodulation anhand des Kommunikationsprotokolls aus dem Empfangssignal auszulesen.

## Claims

1. An optical beam-shaping element (16, 116) for shaping and homogenizing an optical beam of rays, comprising an array (32) of microlenses (26) which have a respective vertex, wherein the lateral positions (28) of the microlenses (26) in the array (32), with respect to the respective vertex (28), are predetermined on the basis of a regular pattern,
wherein respective reference positions (22) for the vertex of a respective microlens (26) are defined by the regular pattern, wherein the reference positions (22) each form the center of a predetermined respective distribution zone (24), and wherein the lateral positions (28) are arranged within the respective distribution region (24) in accordance with a predetermined first stochastic distribution function, and wherein the microlenses (26) have at least one respective phase shift feature which is selected such that the microlenses (26) produce a respective phase shift for light passing through, wherein the respective phase shifts produced by the microlenses (26) differ from one another in accordance with at least a predetermined second stochastic distribution function,
**characterized in that** the phase shift feature comprises the microlenses (26) differing from one another with respect to their thickness in accordance with the second distribution function,
with the difference in thickness being effected solely by addition or subtraction of a planoparallel component with respect to a reference microlens (20); and
**in that** a variation range of the thickness amounts to *n*/*(n-1) x λ,* where *n is* the refractive index of the microlenses (26) and *λ* is a predetermined nominal wavelength for which the beam-shaping element (16, 116) is designed.

2. An optical beam-shaping element (16, 116) in accordance with claim 1,
**characterized in that**
the first and/or the second distribution function describes/describe a uniform distribution.

3. An optical beam-shaping element (16, 116) in accordance with claim 1 or claim 2,
**characterized in that**
the distribution region (24) is formed as a regular polygon or as a circle whose diameter amounts to no more than 20%, preferably no more than 15%, particularly preferably no more than 10% of the diameter of a microlens (26).

4. An optical beam-shaping element (16, 116) in accordance with any one of the preceding claims,
**characterized in that**
each microlens (26) has a cross-section which is derived from an original reference cross-section such that adjacent microlenses (26) are arranged without overlap and are in particular arranged at a minimum spacing from one another.

5. An optical beam-shaping element (16, 116) in accordance with claim 4,
**characterized in that**
the reference cross-section is a regular hexagon.

6. An optical beam-shaping element (16, 116) in accordance with claim 4 or claim 5,
**characterized in that**
the cross-sections of the microlenses (26) are formed such that each microlens (26) at least substantially corresponds to a region of a Voronoi diagram, with a center of a respective region being defined by the lateral position (28) of the vertex of the associated microlens (26).

7. An optical beam-shaping element (16, 116) in accordance with any one of the preceding claims,
**characterized in that**
each microlens (26) has a respective focal length; and
**in that** the focal lengths of all the microlenses (26) are at least equal in magnitude.

8. An optical beam-shaping element (16, 116) in accordance with any one of the preceding claims,
**characterized in that**
the phase shift feature comprises a respective microlens (26) having either a positive focal length or a negative focal length, with the association of a positive or negative focal length with a respective microlens (26) being performed in accordance with the second distribution function.

9. An optical beam-shaping element (16, 116) in accordance with claim 8,
**characterized in that**
the number of microlenses (26) having a positive focal length is substantially equal to the number of microlenses (26) having a negative focal length.

10. A light transmitter arrangement (10, 110) comprising a transmission light source (12) for transmitting a transmission light beam; at least one transmission optics (14) arranged downstream of the transmission light source (12); and an optical beam-shaping element (16, 116) in accordance with any one of the preceding claims arranged upstream or downstream of the transmission optics (14).

11. An optoelectronic sensor arrangement comprising a light transmitter arrangement (10, 110) in accordance with claim 10; a light receiver for receiving light portions of the transmission light beam; a control unit for controlling the light transmitter arrangement (10, 110); and an evaluation unit for evaluating a reception signal of the light receiver.

12. An optoelectronic sensor arrangement in accordance with claim 11, configured as a data light barrier which has a transmission unit, comprising the light transmitter arrangement (10, 110) and the control unit, and a reception unit which is arranged opposite the transmission unit and which comprises the light receiver and the evaluation unit, wherein the control unit is configured to modulate the data onto the transmission light beam using a communication protocol in order to transmit data between the transmission unit and the reception unit, and wherein the evaluation unit is configured to read the data from the reception signal by demodulation using the communication protocol.

## Revendications

1. Élément optique de mise en forme de faisceau (16, 116) pour mettre en forme et homogénéiser un faisceau optique, comprenant un réseau (32) de microlentilles (26) qui présentent un sommet respectif, les positions latérales (28) des microlentilles (26) dans le réseau (32) par rapport au sommet respectif (28) étant prédéterminées sur la base d'un motif régulier,
dans lequel des positions de référence respectives (22) pour le sommet d'une microlentille respective (26) sont définies par ledit motif régulier, lesdites positions de référence (22) formant chacune le centre d'une zone de répartition respective prédéterminée (24), et lesdites positions latérales (28) étant disposées selon une première fonction de répartition stochastique prédéterminée à l'intérieur de ladite zone de répartition respective (24), et les microlentilles (26) ont au moins une caractéristique de déphasage respective qui est choisie de telle sorte que les microlentilles (26) produisent un déphasage respectif pour la lumière qui passe, les déphasages respectifs produits par les microlentilles (26) se distinguant les uns des autres selon au moins une seconde fonction de répartition stochastique prédéterminée,
**caractérisé en ce que**
la caractéristique de déphasage inclut que les microlentilles (26) se distinguent les unes des autres quant à leur épaisseur, selon la seconde fonction de répartition, la différence d'épaisseur étant causée uniquement par l'addition ou la soustraction d'une composante plan-parallèle par rapport à une microlentille de référence (20), et
une plage de variation d'épaisseur est *n*/*(n-1) x λ*, où *n* est l'indice de réfraction des microlentilles (26) et λ est une longueur d'onde nominale prédéterminée pour laquelle l'élément de mise en forme de faisceau (16, 116) est conçu.

2. Élément optique de mise en forme de faisceau (16, 116) selon la revendication 1,
**caractérisé en ce que**
la première et/ou la seconde fonction de répartition décrit une répartition uniforme.

3. Élément optique de mise en forme de faisceau (16, 116) selon la revendication 1 ou 2,
**caractérisé en ce que**
la zone de répartition (24) est réalisée sous forme de polygone régulier ou de cercle dont le diamètre n'est pas supérieur à 20 %, de préférence pas supérieur à 15 %, de manière particulièrement préférée pas supérieur à 10 % du diamètre d'une microlentille (26).

4. Élément optique de mise en forme de faisceau (16, 116) selon l'une des revendications précédentes,
**caractérisé en ce que**
chaque microlentille (26) présente une section transversale qui est dérivée d'une section transversale initiale de référence de telle sorte que des microlentilles (26) adjacentes sont disposées sans chevauchement et, en particulier, à une distance minimale les unes des autres.

5. Élément optique de mise en forme de faisceau (16, 116) selon la revendication 4,
**caractérisé en ce que**
la section transversale de référence est un hexagone régulier.

6. Élément optique de mise en forme de faisceau (16, 116) selon la revendication 4 ou 5,
**caractérisé en ce que**
les sections transversales des microlentilles (26) sont réalisées de telle sorte que chaque microlentille (26) correspond au moins sensiblement à une région d'un diagramme de Voronoï, un centre d'une région respective étant défini par la position latérale (28) du sommet de la microlentille associée (26).

7. Élément optique de mise en forme de faisceau (16, 116) selon l'une des revendications précédentes,
**caractérisé en ce que**
chaque microlentille (26) présente une distance focale respective, et
**en ce que** les distances focales de toutes les microlentilles (26) sont égales au moins en valeur absolue.

8. Élément optique de mise en forme de faisceau (16, 116) selon l'une des revendications précédentes,
**caractérisé en ce que**
la caractéristique de déphasage inclut qu'une microlentille respective (26) présente soit une distance focale positive, soit une distance focale négative, l'association d'une distance focale positive ou négative à une microlentille respective (26) étant faite selon la seconde fonction de répartition.

9. Élément optique de mise en forme de faisceau (16, 116) selon la revendication 8,
**caractérisé en ce que**
le nombre de microlentilles (26) de distance focale positive est sensiblement égal au nombre de microlentilles (26) de distance focale négative.

10. Dispositif émetteur de lumière (10, 110) comprenant une source de lumière d'émission (12) pour l'émission d'un faisceau de lumière d'émission, au moins une optique d'émission (14) disposée en aval de la source de lumière d'émission (12), et un élément optique de mise en forme de faisceau (16, 116) selon l'une des revendications précédentes disposé en amont ou en aval de l'optique d'émission (14).

11. Dispositif capteur optoélectronique comprenant un dispositif émetteur de lumière (10, 110) selon la revendication 10, un récepteur de lumière pour recevoir des composantes lumineuses du faisceau lumineux d'émission, une unité de commande pour commander le dispositif émetteur de lumière (10, 110) et une unité d'évaluation pour évaluer un signal de réception du récepteur de lumière.

12. Dispositif capteur optoélectronique selon la revendication 11, réalisé sous forme de barrière lumineuse de données qui présente une unité d'émission pourvue du dispositif émetteur de lumière (10, 110) et de l'unité de commande, et une unité de réception disposée en face de l'unité d'émission et pourvue du récepteur de lumière et de l'unité d'évaluation, l'unité de commande étant conçue pour moduler des données sur le faisceau lumineux d'émission à l'aide d'un protocole de communication afin de transmettre les données entre l'unité d'émission et l'unité de réception, et l'unité d'évaluation étant conçue pour lire les données à partir du signal de réception par démodulation à l'aide du protocole de communication.
